# EUROPEAN PATENT SPECIFICATION

(11) **EP 3 522 612 B1**
(45) Date of publication and mention of the grant of the patent: **29.07.2020**
(21) Application number: 17861981.3
(22) Date of filing: 16.08.2017
(51) Int. Cl.: H04W 52/02, H04W 88/06, H04W 84/12, H04W 28/02

(54) **INFORMATION TRANSMISSION METHOD AND STATION**
INFORMATIONSÜBERTRAGUNGSVERFAHREN UND -STATION
PROCÉDÉ ET APPAREIL DE TRANSMISSION D'INFORMATIONS

(30) Priority: 20.10.2016 CN 201610914759
(43) Date of publication of application: 07.08.2019
(73) Proprietor: Huawei Technologies Co., Ltd., Longgang District Shenzhen, Guangdong 518129 (CN)
(72) Inventor: HAN, Xiao, Shenzhen Guangdong 518129 (CN); LIN, Meilu, Shenzhen Guangdong 518129 (CN); GUO, Yuchen, Shenzhen Guangdong 518129 (CN); YANG, Xun, Shenzhen Guangdong 518129 (CN)
(74) Representative: Gill Jennings & Every LLP
(86) International application number: PCT/CN2017/097672
(87) International publication number: WO 2018/072544

(56) References cited:
- WO-A1-2014/066046
- CN-A- 102 769 898
- CN-A- 103 404 202
- CN-A- 104 737 597
- CN-A- 105 917 717
- US-A1- 2014 112 229
- US-A1- 2016 142 974

## Description

### TECHNICAL FIELD

Aspects of this application relate to communications technologies, and in particular, to an information transmission method and a station.

### BACKGROUND

In a wireless local area network (Wireless Local Area Network, WLAN), a device-to-device (Device-to-Device, D2D) communications technology may be used for direct communication between stations (Station, STA).

Currently, before D2D communication is performed between the stations, a D2D direct link needs to be set up first by performing a tunneled direct link setup (Tunneled Direct Link Setup, TDLS) procedure. Because a first station is usually unclear about a state of a second station, the first station may send a request to an access point (Access Point, AP). When determining that the second station is in a wake-up state, the AP forwards the request to the second station, so as to set up a D2D direct link between the first station and the second station by performing the TDLS procedure.

Because each step between stations in the TDLS procedure needs to be forwarded by the AP, signaling overheads in the network are relatively heavy, an information delay is relatively long, and communication efficiency is relatively low.

US 2014/0112229 relates to method and apparatus using an ultra low power signal with scheduled power save modes. US 2016/0142974 relates to power saving in wireless transceiver device.

### SUMMARY

Aspects of this application provide an information transmission method and a station, to reduce signaling overheads, shorten an information delay, and improve communication efficiency.

Various aspects of the present disclosure have been defined in the independent claims. Further technical features of each of these aspects have been defined in the respective dependent claims.

According to the information transmission method and the station provided in the aspects of this application, the first station may receive the TWT indication information of the first station that is sent by the AP, and determine the TWT of the WUR of the first station based on the TWT indication information of the first station. The TWT of the WUR of the first station may include the awake time of the WUR of the first station. The second station may also determine the TWT of the WUR of the first station based on the listened and obtained TWT indication information of the first station that is sent by the AP. In the method, the first station may determine the awake time of the WUR of the first station based on the TWT indication information of the first station that is sent by the AP, so that a second station can also determine the awake time of the WUR of the first station based on the TWT indication information of the first station. Then, the second station may clearly learn of a state of the WUR of the first station, so that the WUR of the first station can receive a message directly sent by the WUR of the second station, and then wake up the main radio transceiver of the first station. In this way, each step of a TDLS procedure can be transmitted to the main radio transceiver of the second station, without needing to use the AP to forward the message to the second station, thereby effectively reducing signaling overheads in a network, shortening an information delay, and improving communication efficiency.

### BRIEF DESCRIPTION OF DRAWINGS

FIG. 1 is a schematic structural diagram of a network system to which aspects of this application are applicable;
FIG. 2 is a flowchart of an information transmission method according to Aspect 1 of this application;
FIG. 3 is a schematic diagram of waveforms of a TWT of a WUR and a TWT of a main radio transceiver according to this application;
FIG. 4 is another schematic diagram of waveforms of a TWT of a WUR and a TWT of a main radio transceiver according to this application;
FIG. 5 is still another schematic diagram of waveforms of a TWT of a WUR and a TWT of a main radio transceiver according to this application;
FIG. 6 is a schematic structural diagram of a TWT information element according to this application;
FIG. 7 is a schematic structural diagram of another TWT information element according to this application;
FIG. 8 is a flowchart of an information transmission method according to Aspect 2 of this application;
FIG. 9 is a schematic diagram of a frame structure of a wake-up packet according to Aspect 2 of this application;
FIG. 10 is a schematic structural diagram of an information transmission apparatus according to Aspect 3 of this application;
FIG. 11 is a schematic structural diagram of another information transmission apparatus according to Aspect 3 of this application;
FIG. 12 is a schematic structural diagram of an information transmission apparatus according to Aspect 4 of this application;
FIG. 13 is a schematic structural diagram of another information transmission apparatus according to Aspect 4 of this application;
FIG. 14 is a schematic structural diagram of a station according to Aspect 5 of this application;
FIG. 15 is a schematic structural diagram of a station according to Aspect 6 of this application; and
FIG. 16 is a schematic structural diagram of another station according to Aspect 6 of this application.

### DESCRIPTION OF ASPECTS

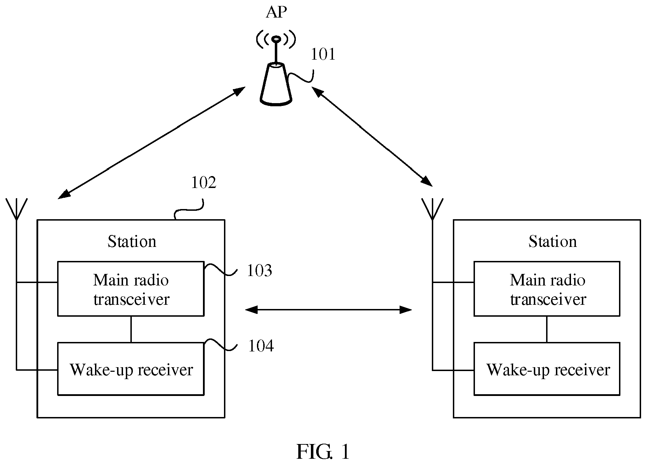

Aspects of this application provide an information transmission method and a station. The information transmission method and the station are applicable to a WLAN system, for example, an Internet of Things system based on a WLAN technology. FIG. 1 is a schematic structural diagram of a network system to which the aspects of this application are applicable. As shown in FIG. 1, the network system to which the information transmission method is applicable may include, for example, one AP 101 and a plurality of stations 102. Each station 102 may include one main radio (main radio) transceiver 103 and a wake-up receiver (Wake-Up Receiver, WUR) 104, and the main radio transceiver 103 connects to the WUR 104. The main radio transceiver 103 may be a Wireless Fidelity (Wireless Fidelity, Wi-Fi) device. When there is no data transmission on the station, the main radio transceiver 103 may be in a sleep state. The Wi-Fi device may be, for example, a Wi-Fi device that supports any standard of 802.11. The WUR 104 may also be referred to as a wireless receiver chip of a low power wake-up receiver (Low Power Wake-Up Receiver, LP-WUR). When the WUR 104 is in an active state, namely, in an awake state, power consumption may be less than 100 µW. The plurality of stations 102 include a station located in a same basic service set (Basic Service Set, BSS) as the AP 101, and may also include a station located in a different BSS from the AP 101.

It should be noted that, the following methods shown in this application may implement a D2D direct link between two stations within a same BSS, and may also implement a D2D direct link between two stations in different BSSs. The following uses a plurality of instances for detailed description.

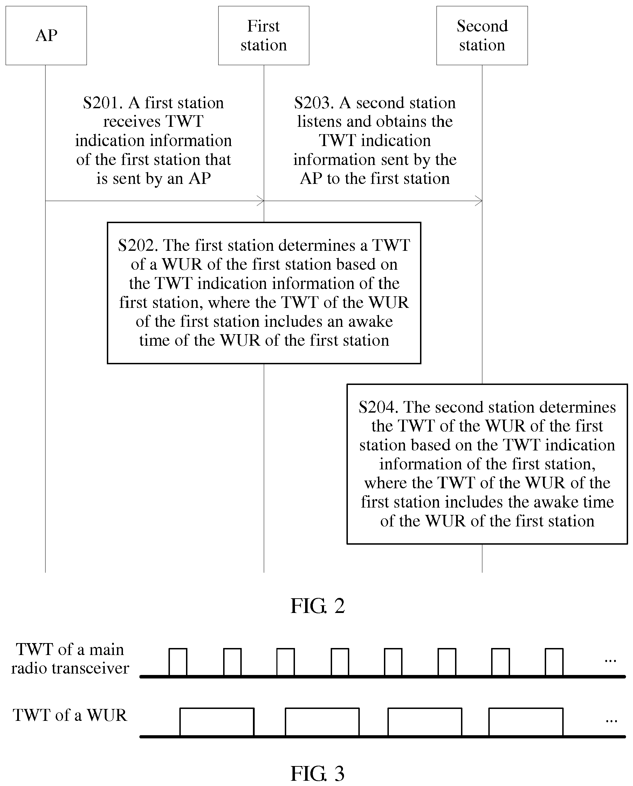

Aspect 1 of this application provides an information transmission method. FIG. 2 is a flowchart of the information transmission method according to Aspect 1 of this application. As shown in FIG. 2, the method may include:
S201. A first station receives target wake time (Target Wake Time, TWT) indication information of the first station that is sent by an AP.

Specifically, the first station may receive a radio frame sent by the AP through broadcasting, and the radio frame may include the TWT indication information. For example, the radio frame may be a beacon (Beacon) frame or another management frame. In S201, the first station and the AP may be located in a same BSS.

The TWT indication information of the first station may include TWT indication information of a WUR of the first station, and/or TWT indication information of a main radio transceiver of the first station.

S202. The first station determines a TWT of a WUR of the first station based on the TWT indication information of the first station, where the TWT of the WUR of the first station includes an awake time (awake time) of the WUR of the first station.

Specifically, if the TWT indication information of the first station includes the TWT indication information of the WUR of the first station, the first station may determine the TWT of the WUR of the first station based on the TWT indication information of the WUR of the first station. If the TWT indication information of the first station includes the TWT indication information of the main radio transceiver of the first station, the first station may determine a TWT of the main radio transceiver of the first station based on the TWT indication information of the main radio transceiver of the first station, and then determine the TWT of the WUR of the first station based on the TWT of the main radio transceiver of the first station.

The TWT of the WUR of the first station may include the awake time and a sleep time (sleep time) of the WUR of the first station. The WUR of the first station is in an on (On) state within the awake time of the WUR of the first station. The WUR of the first station is in an off (Off) state within the sleep time of the WUR of the first station.

Within the awake time of the WUR of the first station, the WUR of the first station may receive a wake-up packet sent by a WUR of a second station. If the WUR of the first station receives the wake-up packet, the WUR of the first station wakes up the main radio transceiver of the first station.

Optionally, the method may further include:
S203. A second station listens and obtains the TWT indication information sent by the AP to the first station.

Specifically, S203 and S201 may be performed simultaneously.

S204. The second station determines the TWT of the WUR of the first station based on the TWT indication information of the first station, where the TWT of the WUR of the first station includes the awake time of the WUR of the first station.

Specifically, a specific implementation process of S204 is similar to an implementation process, in S202, in which the first station determines the TWT of the WUR of the first station. Details are not described herein again. It should be noted that S204 and S202 may be performed simultaneously or not. This is not limited in this application.

If the second station determines the TWT of the WUR of the first station, it may be determined that the WUR of the first station is in the on state within the awake time of the WUR of the first station. Therefore, the second station may send the wake-up packet to the WUR of the first station within the awake time of the WUR of the first station, so that when the WUR of the first station receives the wake-up packet, the WUR of the first station wakes up the main radio transceiver of the first station.

According to the information transmission method provided in Aspect 1 of this application, the first station may receive the TWT indication information of the first station that is sent by the AP, and determine the TWT of the WUR of the first station based on the TWT indication information of the first station. The TWT of the WUR of the first station may include the awake time of the WUR of the first station. The second station may also determine the TWT of the WUR of the first station based on the listened and obtained TWT indication information of the first station that is sent by the AP. In the method, the first station may determine the awake time of the WUR of the first station based on the TWT indication information of the first station that is sent by the AP, so that a second station can also determine the awake time of the WUR of the first station based on the TWT indication information of the first station. Then, the second station may clearly learn of a state of the WUR of the first station, so that the WUR of the first station can receive a message directly sent by the WUR of the second station, and then wake up the main radio transceiver of the first station. In this way, each step of a TDLS procedure can be transmitted to a main radio transceiver of the second station, without needing to use the AP to forward the message to the second station, thereby effectively reducing signaling overheads in a network, shortening an information delay, and improving communication efficiency.

Optionally, the TWT of the WUR of the first station and the TWT of the main radio transceiver of the first station are independent of each other. The TWT indication information of the first station includes indication information corresponding to the TWT of the WUR of the first station.

Optionally, in S202, that the first station determines the TWT of the WUR of the first station based on the TWT indication information of the first station may include that:
The first station determines the TWT of the WUR of the first station based on the indication information corresponding to the TWT of the WUR of the first station.

Correspondingly, in S204, that the second station determines the TWT of the WUR of the first station based on the TWT indication information of the first station may include that:
The second station determines the TWT of the WUR of the first station based on the indication information corresponding to the TWT of the WUR of the first station.

Specifically, if the TWT indication information of the first station includes the indication information corresponding to the TWT of the WUR of the first station, either the first station or the second station may determine the TWT of the WUR of the first station directly based on the indication information corresponding to the TWT of the WUR of the first station.

That the TWT of the WUR of the first station and the TWT of the main radio transceiver of the first station are independent of each other may include the following: The awake time of the WUR of the first station is independent of an awake time of the main radio transceiver of the first station and/or a sleep time of the main radio transceiver of the first station, and the sleep time of the WUR of the first station is also independent of the awake time of the main radio transceiver of the first station and/or the sleep time of the main radio transceiver of the first station.

The following uses an instance for description. FIG. 3 is a schematic diagram of waveforms of a TWT of a WUR and a TWT of a main radio transceiver according to this application. In a waveform corresponding to the TWT of the main radio transceiver in FIG. 3, a time corresponding to a high level is an awake time of the main radio transceiver, and a time corresponding to a low level may be a sleep time of the main radio transceiver. In a waveform corresponding to the TWT of the WUR, a time corresponding to a high level is an awake time of the WUR, and a time corresponding to a low level may be a sleep time of the WUR. As shown in FIG. 3, the awake time of the WUR of the first station may be independent of the awake time of the main radio transceiver of the first station and/or the sleep time of the main radio transceiver of the first station. The sleep time of the WUR of the first station is also independent of the awake time of the main radio transceiver of the first station and/or the sleep time of the main radio transceiver of the first station.

Alternatively, the TWT indication information of the first station described above includes indication information corresponding to the TWT of the main radio transceiver of the first station.

Optionally, in S202, that the first station determines the TWT of the WUR of the first station based on the TWT indication information of the first station may include that:
The first station determines the TWT of the main radio transceiver of the first station based on the indication information corresponding to the TWT of the main radio transceiver of the first station; and
the first station determines the TWT of the WUR of the first station based on the TWT of the main radio transceiver of the first station and a preset correspondence between the TWT of the main radio transceiver and the TWT of the WUR.

Correspondingly, in S204, that the second station determines the TWT of the WUR of the first station based on the TWT indication information of the first station may include that:
The second station determines the TWT of the main radio transceiver of the first station based on the indication information corresponding to the TWT of the main radio transceiver of the first station; and
the second station determines the TWT of the WUR of the first station based on the TWT of the main radio transceiver of the first station and the preset correspondence between the TWT of the main radio transceiver and the TWT of the WUR

Specifically, the TWT indication information of the first station includes the indication information corresponding to the TWT of the main radio transceiver of the first station. Either the first station or the second station may determine the TWT of the main radio transceiver of the first station based on the indication information corresponding to the TWT of the main radio transceiver of the first station, and then determine the TWT of the WUR of the first station based on the TWT of the main radio transceiver of the first station.

Optionally, the correspondence between the TWT of the main radio transceiver and the TWT of the WUR may include the following:
The awake time of the main radio transceiver is the sleep time of the WUR, and the sleep time of the main radio transceiver is the awake time of the WUR; or
the awake time of the main radio transceiver includes at least one sleep time and at least one awake time of the WUR, and the sleep time of the main radio transceiver is the awake time of the WUR; or
the awake time of the main radio transceiver is the sleep time of the WUR, and the sleep time of the main radio transceiver includes at least one sleep time and at least one awake time of the WUR

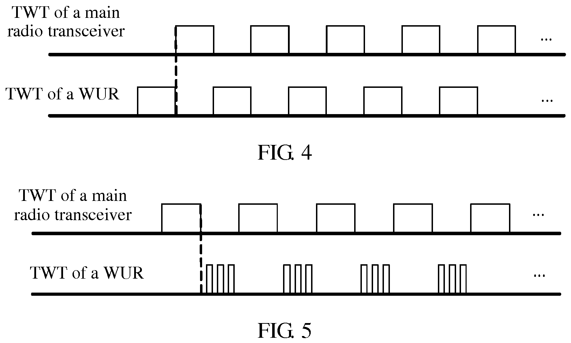

The following uses an instance for description. FIG. 4 is another schematic diagram of waveforms of a TWT of a WUR and a TWT of a main radio transceiver according to this application. FIG. 5 is still another schematic diagram of waveforms of a TWT of a WUR and a TWT of a main radio transceiver according to this application. In waveforms corresponding to the TWT of the main radio transceiver in FIG. 4 and FIG. 5, a time corresponding to a high level is an awake time of the main radio transceiver, and a time corresponding to a low level may be a sleep time of the main radio transceiver. In waveforms corresponding to the TWT of the WUR, a time corresponding to a high level is an awake time of the WUR, and a time corresponding to a low level may be a sleep time of the WUR. As shown in FIG. 4, the awake time of the main radio transceiver may be the sleep time of the WUR, and the sleep time of the main radio transceiver may be the awake time of the WUR

As shown in FIG. 5, the awake time of the main radio transceiver may be the sleep time of the WUR, and the sleep time of the main radio transceiver may include at least one sleep time and at least one awake time of the WUR

Optionally, the TWT indication information of the first station includes TWT parameter information. The TWT parameter information includes at least one piece of information of: an initial wake-up moment, a wake-up interval, and minimum wake-up duration (Minimum wake-up Duration).

Specifically, the initial wake moment may be a first wake-up moment, and may be indicated as a target wake time (Target Wake Time). The wake-up interval may be a TWT wake-up interval (TWT wake-up interval), and the wake-up interval may indicate a time interval between two adjacent awake phases. The minimum wake-up duration may be minimum duration of each awake phase.

Optionally, the TWT parameter information further includes a TWT type identifier. The TWT type identifier is used to indicate that the TWT indication information of the first station is the indication information corresponding to the TWT of the WUR of the first station or is the indication information corresponding to the TWT of the main radio transceiver of the first station.

As described above, the TWT indication information of the first station may be located in a conventional TWT element (element), or in a new information element (Information Element).

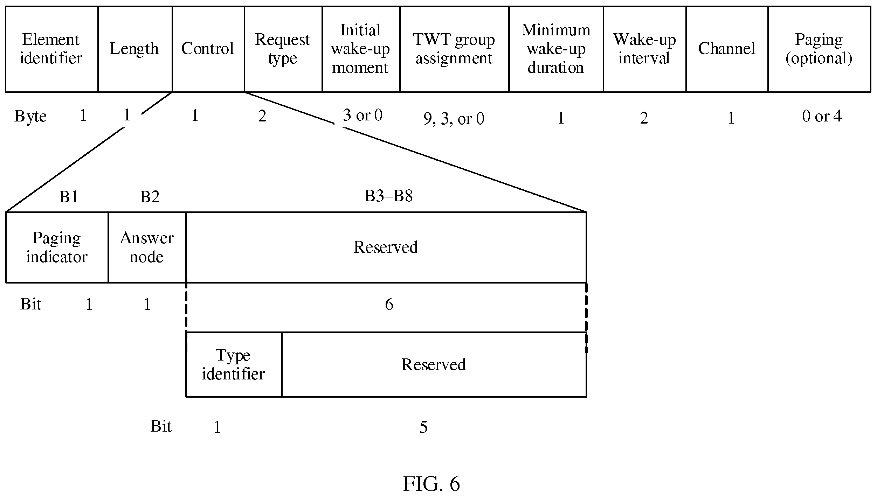

For example, FIG. 6 is a schematic structural diagram of a TWT information element according to this application. As shown in FIG. 6, the TWT information element may include, for example, a 1-byte element identifier (Element ID) field, a 1-byte length (length) field, a 1-byte control (control) field, a 1-byte request type (request type) field, a 3- or 0-byte initial wake-up moment, a 9-, 3-, or 0-byte Target wake time group assignment (TWT group assignment) field, a 1-byte minimum wake-up duration field, a 2-byte wake interval field, a 1-byte channel field that may carry a TWT channel, and an optional field. The optional field may be a Neighbor Discovery Protocol (Neighbor Discovery Protocol, NDP) paging field of 0 or 4 bytes. The control field may include a 1-bit paging indicator, a 1-bit answer node, and a 5-bit reserved bit. At least one bit in the reserved bit may carry a type identifier, for example, a TWT type identifier. For example, if the TWT type identifier is a WUR, the TWT type identifier is used to indicate that the TWT indication information of the first station is the indication information corresponding to the TWT of the WUR of the first station.

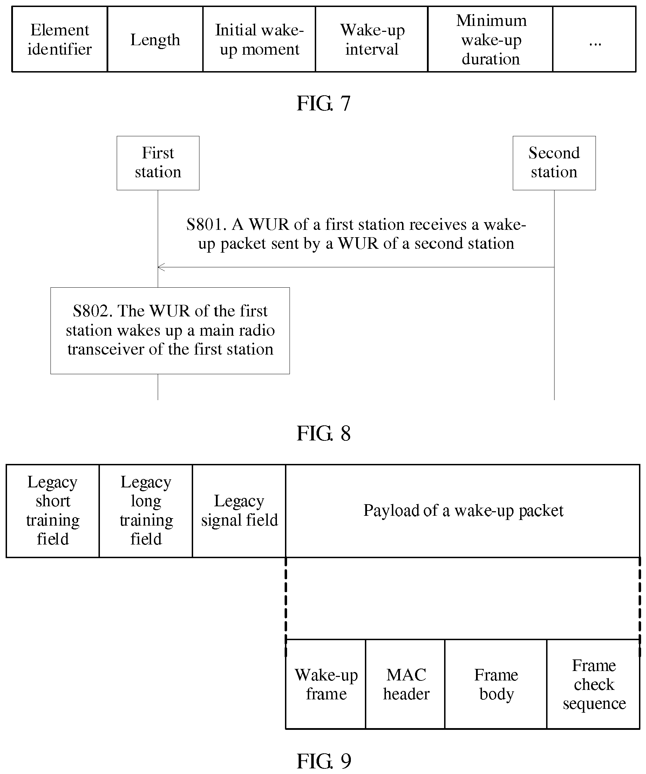

FIG. 7 is a schematic structural diagram of another TWT information element according to this application. As shown in FIG. 7, the TWT information element may include an element identifier field, a length field, an initial wake-up moment field, a wake-up interval field, minimum wake-up duration field, and the like.

Optionally, the TWT indication information of the first station includes an identifier of a station group to which the first station belongs and TWT parameter information corresponding to the station group to which the first station belongs. TWT parameter information of the WUR of the first station is the TWT parameter information corresponding to the station group to which the first station belongs.

The TWT parameter information includes at least one piece of information of: an initial wake-up moment, a TWT wake-up interval, and minimum wake-up duration.

Specifically, in the method, a group identifier (group ID) field may be added to the information element shown in FIG. 7, to carry the identifier of the station group to which the first station belongs.

Optionally, the TWT indication information of the first station further includes a quantity of station groups corresponding to the AP.

Specifically, in the method, a group quantity field may be added to the information element shown in FIG. 7, to carry the quantity of station groups corresponding to the AP. For example, if a value of the group quantity field is 0, it may indicate that the quantity of station groups corresponding to the AP is 1; if a value of the group quantity field is 1, it may indicate that the quantity of station groups corresponding to the AP is 2; or if a value of the group quantity field is 2, it may indicate that the quantity of station groups corresponding to the AP is 3.

It should be noted that the first station may further receive TWT parameter information, corresponding to another group, delivered by the AP.

Optionally, association identifiers (Association Identifier, AID) of different stations in a same station group are different.

Values obtained by using a same preset algorithm for the AIDs of the different stations in the same station group are the same; or
values obtained by using a same preset algorithm for the AIDs of the different stations in the same station group are all even numbers; or
values obtained by using a same preset algorithm for the AIDs of the different stations in the same station group are all odd numbers.

That is, the station group may be divided based on an AID of a station.

For example, the quantity of station groups corresponding to the AP is 3. In an implementation, stations whose AIDs modulo 3 have a remainder 0 may be one station group corresponding to the AP. Stations whose AIDs modulo 3 have a remainder 1 may be another station group corresponding to the AP. Stations whose AIDs modulo 3 have a remainder 2 may be still another station group corresponding to the AP. That is, values obtained by using a same preset algorithm for AIDs of stations in different station groups are different.

In another implementation, stations whose AIDs modulo 3 have a remainder 1 may be one station group corresponding to the AP. Stations whose AIDs modulo 4 have a remainder 1 may be another station group corresponding to the AP. Stations whose AIDs modulo 5 have a remainder 1 may be still another station group corresponding to the AP. By analogy, stations whose AIDs modulo x have a remainder 1 may be yet another station group corresponding to the AP. That is, values obtained by using different preset algorithms for AIDs of stations in different station groups are different.

Certainly, the quantity of station groups corresponding to the AP may be another value, and the value herein is merely an instance for description. This application is not limited thereto.

Optionally, media access control (Media Access Control, MAC) addresses of different stations in a same station group are different.

Values obtained by using a same preset algorithm for the MAC addresses of the different stations in the same station group are the same; or
values obtained by using a same preset algorithm for the MAC addresses of the different stations in the same station group are all even numbers; or
values obtained by using a same preset algorithm for the MAC addresses of the different stations in the same station group are all odd numbers.

That is, the station group may be alternatively divided based on a MAC address of a station.

For example, the quantity of station groups corresponding to the AP is 3. In an implementation, stations whose MAC address modulo 3 has a remainder 0 may be one station group corresponding to the AP. Stations whose MAC address modulo 3 has a remainder 1 may be another station group corresponding to the AP. Stations whose MAC address modulo 3 has a remainder 2 may be still another station group corresponding to the AP. That is, values obtained by using a same preset algorithm for MAC address of stations in different station groups are different.

In another implementation, stations whose MAC address modulo 3 has a remainder 1 may be one station group corresponding to the AP. Stations whose MAC address modulo 4 has a remainder 1 may be another station group corresponding to the AP. Stations whose MAC address modulo 5 has a remainder 1 may be still another station group corresponding to the AP. That is, values obtained by using different preset algorithms for MAC address of stations in different station groups are the same.

Certainly, the quantity of station groups corresponding to the AP may be another value, and the value herein is merely an instance for description. This application is not limited thereto.

Optionally, service types of different stations in a same station group are the same; or
electricity quantities of different stations in a same station group fall within a same preset range.

That is, a station group may be divided based on a service type of a station. Service types of stations in a same station group are the same, and service types of stations in different station groups are different. The station group may be alternatively divided based on an electricity quantity of the station. Electricity quantities of stations in a same station group are in a same range, and electricity quantities of stations in different station groups are in different ranges. The electricity quantity of the station may be a full electric quantity and/or a remaining electricity quantity of the station, and the like.

Optionally, the TWT indication information of the first station may further include an identifier of a station group to which the first station belongs.

Optionally, Aspect 2 of this application may further provide an information transmission method. FIG. 8 is a flowchart of the information transmission method according to Aspect 2 of this application. As shown in FIG. 8, the method may include:
S801. A WUR of a first station receives a wake-up packet (wake-up packet) sent by a WUR of the second station.

The wake-up packet is sent after the second station listens and obtains TWT indication information of the first station, and determines a TWT of the WUR of the first station based on the TWT indication information of the first station.

Specifically, the wake-up packet may include a TDLS request, or may not include the TDLS request. If the wake-up packet includes the TDLS request, the TDLS request may be located in a MAC header (header) or a frame body (frame body) of the wake-up packet.

S802. The WUR of the first station wakes up a main radio transceiver of the first station.

Specifically, the WUR of the first station may send the wake-up packet to the main radio transceiver of the first station, so as to wake up the main radio transceiver of the first station.

Optionally, if the wake-up packet includes the TDLS request, the method may further include the following:

The main radio transceiver of the first station sends a TDLS response to a main radio transceiver of the second station.

Specifically, if a wake-up transition time (wake-up transition time) of the first station is greater than or equal to a preset time, before the main radio transceiver of the first station sends the TDLS response to the main radio transceiver of the second station, the first station further needs to perform channel contention. If the wake-up transition time of the first station is less than the preset time, the main radio transceiver of the first station may directly send the TDLS response to the main radio transceiver of the second station.

The TDLS request may be any one of a TDLS discovery request (Discovery Request), a TDLS direct link setup request (Direct link Setup Request), and a TDLS direct link teardown request (Direct link Teardown Request).

Optionally, the wake-up packet further includes a TDLS request type.

The first station may determine, based on the TDLS request type, a type of the TDLS request included in the wake-up packet, which is specifically the TDLS discovery request, the TDLS direct link setup request, or the TDLS direct link teardown request.

Specifically, if the wake-up packet includes the TDLS request, the TDLS request type may be located in the MAC header of the wake-up packet, and processing information of the TDLS request may be located in the frame body of the wake-up packet.

FIG. 9 is a schematic diagram of a frame structure of a wake-up packet according to Aspect 2 of this application. As shown in FIG. 9, the wake-up packet may include a legacy short training field (Legacy Short Training Field, L-STF), a legacy long training field (Legacy Long Training Field, L-LTF), a legacy signal field (Legacy SIGnal field, L-SIG), and a payload of the wake-up packet (Payload of Wake-up Packet). The L-STF is used to enable a station that supports an 802.11 technical standard to detect a start of the wake-up packet. The L-SIG is used to enable a station that supports an 802.11 technical standard to detect an end of the wake-up packet. The L-SIG is further used to indicate a length of the payload of the wake-up packet, and the length of the payload is length (length) × 8/sequence number of a modulation and coding scheme (Modulation and Coding Scheme, MCS). The payload of the wake-up packet may include a wake-up frame (Wake-up Frame), a MAC header, a frame body, and a frame check sequence (Frame Check Sequence, FCS). The wake-up frame may include a preset sequence, such as a pseudo-noise sequence (Pseudo-Noise Sequence). The MAC header may include an address of a receiving station and the TDLS request type. The frame body may include the processing information of the TDLS request.

The TDLS request type may be located in at least one bit (bit) in a preset information field in the MAC header. The preset information field may be a TDLS request field, such as a TDLS discovery request field, a TDLS direct link setup request field, or a TDLS direct link teardown request field. The preset information field may alternatively be a frame type field (Frame Type Field).

Optionally, if the wake-up packet includes the TDLS request or does not include the TDLS request, the method may further include the following:
The WUR of the first station receives a TDLS request sent by the WUR of the second station; and
the main radio transceiver of the first station sends a TDLS response to the main radio transceiver of the second station.

Specifically, a preset time later after the TDLS request is received, the first station sends an acknowledgment (ACKnowledgment, ACK) to the WUR of the second station, to indicate that the WUR of the first station has received the TDLS request. The preset time may be a short interframe space (Short Interframe Space, SIFS) or a preset interframe space (X Interframe Space, XIFS). If the wake-up transition time of the first station is greater than or equal to the preset time, before the main radio transceiver of the first station sends the TDLS response to the main radio transceiver of the second station, the first station further needs to perform channel contention. If the wake-up transition time of the first station is less than the preset time, the main radio transceiver of the first station may directly send the TDLS response to the main radio transceiver of the second station.

Optionally, if the TDLS request is a TDLS discovery request, the TDLS response is a TDLS discovery response (Discovery Response); or
if the TDLS request is a TDLS direct link setup request, the TDLS response is a TDLS direct link setup response (Direct link Setup Response); or
if the TDLS request is a TDLS direct link teardown request, the TDLS response is a TDLS direct link teardown response (Direct link Teardown Response).

Optionally, if the TDLS request is the TDLS direct link setup request, the method may further include the following:
The main radio transceiver of the first station receives a TDLS direct link setup confirmation (Direct link Setup Confirmation) sent by the main radio transceiver of the second station.

Specifically, the second station may send an ACK to the main radio transceiver of the first station a preset time later after receiving the TDLS response sent by the first station, so as to indicate that the main radio transceiver of the second station has received the TDLS response. The second station may perform channel contention after sending the ACK, so as to send the TDLS direct link setup confirmation to the main radio transceiver of the first station. The second station may directly perform channel contention after sending the ACK, or may perform channel contention a preset time later after sending the ACK. The preset time may be an SIFS or an XIFS.

In the information transmission method provided in Aspect 2 of this application, the wake-up packet sent by the WUR of the second station may be received by the WUR of the first station, and the WUR of the first station wakes up the main radio transceiver of the first station, to transmit each step of TDLS procedure to the second station, so as to implement a D2D direct link. Because each step of the TDLS procedure in the method does not need to be forwarded by the AP, the information transmission method in this application may implement a D2D direct link between stations in a same BSS, and may also implement a D2D direct link between stations in different BSSs.

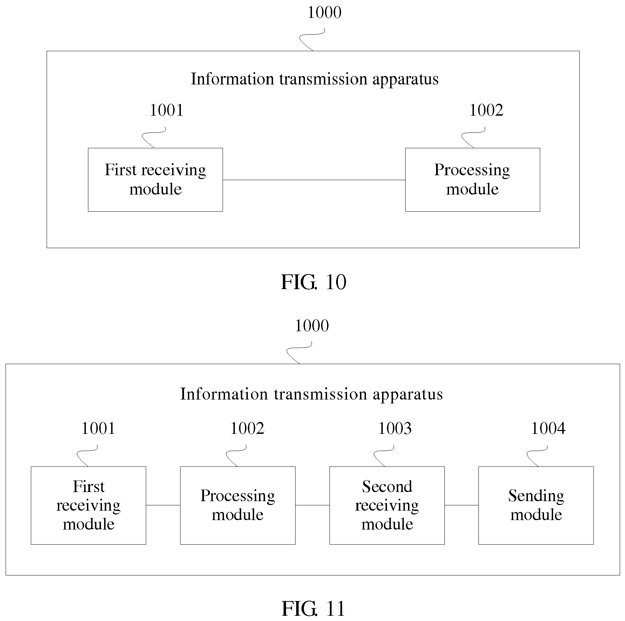

Aspect 3 of this application further provides an information transmission apparatus. FIG. 10 is a schematic structural diagram of the information transmission apparatus according to Aspect 3 of this application. As shown in FIG. 10, an information transmission apparatus 1000 may include a first receiving module 1001, configured to receive TWT indication information, of a first station, sent by an AP; and
a processing module 1002, configured to determine a TWT of a wake-up receiver WUR of the first station based on the TWT indication information of the first station, where the TWT of the WUR of the first station includes an awake time of the WUR of the first station.

Optionally, the TWT of the WUR of the first station and a TWT of a main radio transceiver of the first station are independent of each other. The TWT indication information of the first station includes indication information corresponding to the TWT of the WUR of the first station.

Alternatively, the TWT indication information of the first station includes indication information corresponding to the TWT of the main radio transceiver of the first station.

The processing module 1002 is specifically configured to: determine the TWT of the main radio transceiver of the first station based on the indication information corresponding to the TWT of the main radio transceiver of the first station; and determine the TWT of the WUR of the first station based on the TWT of the main radio transceiver of the first station, and a preset correspondence between the TWT of the main radio transceiver and the TWT of the WUR

Optionally, the correspondence between the TWT of the main radio transceiver and the TWT of the WUR includes the following:
An awake time of the main radio transceiver is a sleep time of the WUR, and a sleep time of the main radio transceiver is the awake time of the WUR of the first station; or
an awake time of the main radio transceiver includes at least one sleep time and at least one awake time of the WUR, and a sleep time of the main radio transceiver is the awake time of the WUR; or
an awake time of the main radio transceiver is a sleep time of the WUR, and a sleep time of the main radio transceiver includes at least one sleep time and at least one awake time of the WUR

Optionally, the TWT indication information of the first station includes TWT parameter information. The TWT parameter information includes at least one piece of information of: an initial wake-up moment, a wake-up interval, and minimum wake-up duration.

Optionally, the TWT parameter information further includes a TWT type identifier. The TWT type identifier is used to indicate that the TWT indication information of the first station is the indication information corresponding to the TWT of the WUR of the first station or is the indication information corresponding to the TWT of the main radio transceiver of the first station.

Alternatively, the TWT indication information of the first station includes an identifier of a station group to which the first station belongs and TWT parameter information corresponding to the station group to which the first station belongs. TWT parameter information of the WUR of the first station is the TWT parameter information corresponding to the station group to which the first station belongs.

The TWT parameter information includes at least one piece of information of: an initial wake-up moment, a TWT wake-up interval, and minimum wake-up duration.

Optionally, the TWT indication information of the first station further includes a quantity of station groups corresponding to the AP.

Optionally, association identifiers AIDs of different stations in a same station group are different.

Values obtained by using a same preset algorithm for the AIDs of the different stations in the same station group are the same; or
values obtained by using a same preset algorithm for the AIDs of the different stations in the same station group are all even numbers; or
values obtained by using a same preset algorithm for the AIDs of the different stations in the same station group are all odd numbers.

Alternatively, media access control MAC addresses of different stations in a same station group are different.

Values obtained by using a same preset algorithm for the MAC addresses of the different stations in the same station group are the same; or
values obtained by using a same preset algorithm for the MAC addresses of the different stations in the same station group are all even numbers; or
values obtained by using a same preset algorithm for the MAC addresses of the different stations in the same station group are all odd numbers.

Alternatively, service types of different stations in a same station group are the same; or
electricity quantities of different stations in a same station group fall within a same preset range.

Optionally, FIG. 11 is a schematic structural diagram of another information transmission apparatus according to Aspect 3 of this application. As shown in FIG. 11, the information transmission apparatus 1000 further includes a second receiving module 1003, configured to: receive a wake-up packet sent by a WUR of a second station, and wake up the main radio transceiver of the first station based on the wake-up packet. The wake-up packet is sent after the second station listens and obtains the TWT indication information of the first station, and determines the TWT of the WUR of the first station based on the TWT indication information of the first station.

Optionally, the wake-up packet includes a tunneled direct link setup TDLS request.

The information transmission apparatus 1000 further includes:
a sending module 1004, configured to send a TDLS response to a main radio transceiver of the second station.

Optionally, the wake-up packet further includes a TDLS request type.

Optionally, the second receiving module 1003 is further configured to receive a TDLS request sent by the WUR of the second station.

The sending module 1004 is further configured to send a TDLS response to the main radio transceiver of the second station.

Optionally, if the TDLS request is a TDLS discovery request, the TDLS response is a TDLS discovery response; or
if the TDLS request is a TDLS direct link setup request, the TDLS response is a TDLS direct link setup response; or
if the TDLS request is a TDLS direct link teardown request, the TDLS response is a TDLS direct link teardown response.

Optionally, if the TDLS request is a TDLS direct link setup request,
the first receiving module 1001 is further configured to receive a TDLS direct link setup confirmation sent by the main radio transceiver of the second station.

The information transmission apparatuses provided in Aspect 3 of this application may perform the information transmission method performed by the first station in any one of FIG. 2 to FIG. 9. For a specific implementation process and beneficial effects, refer to the foregoing description, and details are not described herein again.

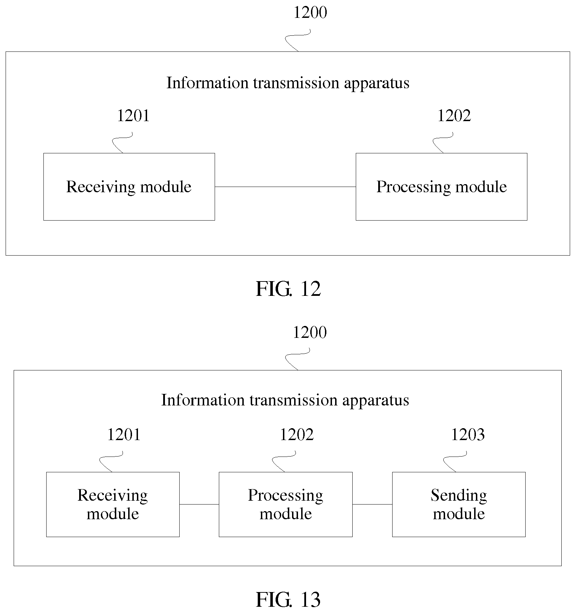

Aspect 4 of this application provides an information transmission apparatus. FIG. 12 is a schematic structural diagram of the information transmission apparatus according to Aspect 4 of this application. As shown in FIG. 12, an information transmission apparatus 1200 includes:
a receiving module 1201, configured to listen for TWT indication information sent by an AP to a first station, and
a processing module 1202, configured to determine a TWT of a wake-up receiver WUR of the first station based on the TWT indication information of the first station, where the TWT of the WUR of the first station includes an awake time of the WUR of the first station.

Optionally, the TWT indication information of the first station includes indication information corresponding to the TWT of the WUR of the first station.

Alternatively, the TWT indication information of the first station includes indication information corresponding to a TWT of a main radio transceiver of the first station.

The processing module 1202 is specifically configured to determine the TWT of the WUR of the first station based on the indication information corresponding to the TWT of the main radio transceiver of the first station and a preset correspondence between the TWT of the main radio transceiver and the TWT of the WUR

Optionally, FIG. 13 is a schematic structural diagram of another information transmission apparatus according to Aspect 4 of this application. As shown in FIG. 13, the information transmission apparatus 1200 further includes a sending module 1203, configured to send a wake-up packet to the WUR of the first station. The wake-up packet is used to instruct the WUR of the first station to wake up the main radio transceiver of the first station.

Optionally, the wake-up packet includes a tunneled direct link setup TDLS request.

The receiving module 1201 is further configured to receive a TDLS response sent by the main radio transceiver of the first station.

Optionally, the wake-up packet further includes a TDLS request type.

Alternatively, the sending module 1203 is further configured to send a TDLS request to the WUR of the first station.

The receiving module 1201 is further configured to receive a TDLS response sent by the main radio transceiver of the first station.

Optionally, if the TDLS request is a TDLS discovery request, the TDLS response is a TDLS discovery response; or
if the TDLS request is a TDLS direct link setup request, the TDLS response is a TDLS direct link setup response; or
if the TDLS request is a TDLS direct link teardown request, the TDLS response is a TDLS direct link teardown response.

The information transmission apparatuses provided in Aspect 4 of this application may perform the information transmission method performed by the second station in any one of FIG. 2 to FIG. 9. For a specific implementation process and beneficial effects, refer to the foregoing description, and details are not described herein again.

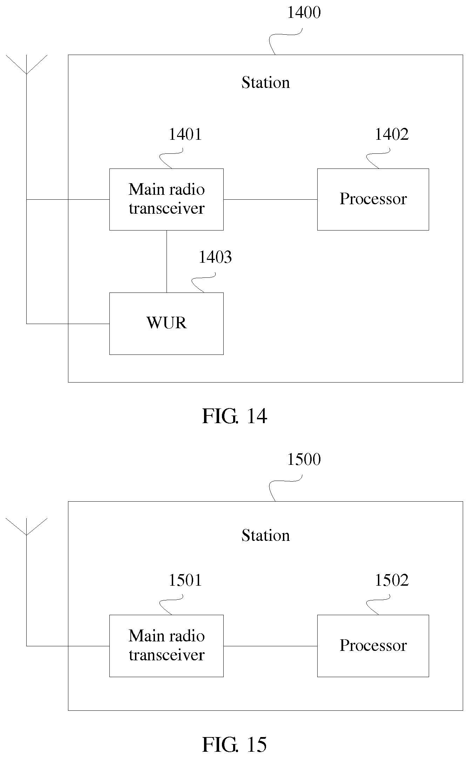

Aspect 5 of this application provides a station. FIG. 14 is a schematic structural diagram of the station according to Aspect 5 of this application. As shown in FIG. 14, a station 1400 may include a main radio transceiver 1401, a processor 1402, and a WUR 1403. The main radio transceiver 1401 connects to the processor 1402, and the main radio transceiver 1401 further connects to the WUR 1403. The station 1400 is a first station.

The main radio transceiver 1401 is configured to receive TWT indication information of the first station that is sent by an AP.

The processor 1402 is configured to determine a TWT of the WUR of the first station based on the TWT indication information of the first station, where the TWT of the WUR of the first station includes an awake time of the WUR of the first station.

Optionally, the TWT of the WUR of the first station and a TWT of the main radio transceiver of the first station are independent of each other. The TWT indication information of the first station includes indication information corresponding to the TWT of the WUR of the first station.

Alternatively, the TWT indication information of the first station includes indication information corresponding to the TWT of the main radio transceiver of the first station.

The processor 1402 is specifically configured to: determine the TWT of the main radio transceiver of the first station based on the indication information corresponding to the TWT of the main radio transceiver of the first station; and determine the TWT of the WUR of the first station based on the TWT of the main radio transceiver of the first station, and a preset correspondence between the TWT of the main radio transceiver and the TWT of the WUR

Optionally, the correspondence between the TWT of the main radio transceiver and the TWT of the WUR includes the following:
An awake time of the main radio transceiver is a sleep time of the WUR, and a sleep time of the main radio transceiver is the awake time of the WUR of the first station; or
an awake time of the main radio transceiver includes at least one sleep time and at least one awake time of the WUR, and a sleep time of the main radio transceiver is the awake time of the WUR; or
an awake time of the main radio transceiver is a sleep time of the WUR, and a sleep time of the main radio transceiver includes at least one sleep time and at least one awake time of the WUR

Optionally, the TWT indication information of the first station includes TWT parameter information. The TWT parameter information includes at least one piece of information of: an initial wake-up moment, a wake-up interval, and minimum wake-up duration.

Optionally, the TWT parameter information further includes a TWT type identifier. The TWT type identifier is used to indicate that the TWT indication information of the first station is the indication information corresponding to the TWT of the WUR of the first station or is the indication information corresponding to the TWT of the main radio transceiver of the first station.

Optionally, the TWT indication information of the first station includes an identifier of a station group to which the first station belongs and TWT parameter information corresponding to the station group to which the first station belongs. TWT parameter information of the WUR of the first station is the TWT parameter information corresponding to the station group to which the first station belongs.

The TWT parameter information includes at least one piece of information of: an initial wake-up moment, a TWT wake-up interval, and minimum wake-up duration.

Optionally, the TWT indication information of the first station further includes a quantity of station groups corresponding to the AP.

Optionally, association identifiers AIDs of different stations in a same station group are different.

Values obtained by using a same preset algorithm for the AIDs of the different stations in the same station group are the same; or
values obtained by using a same preset algorithm for the AIDs of the different stations in the same station group are all even numbers; or
values obtained by using a same preset algorithm for the AIDs of the different stations in the same station group are all odd numbers.

Alternatively, media access control MAC addresses of different stations in a same station group are different.

Values obtained by using a same preset algorithm for the MAC addresses of the different stations in the same station group are the same; or
values obtained by using a same preset algorithm for the MAC addresses of the different stations in the same station group are all even numbers; or
values obtained by using a same preset algorithm for the MAC addresses of the different stations in the same station group are all odd numbers.

Alternatively, service types of different stations in a same station group are the same; or
electricity quantities of different stations in a same station group fall within a same preset range.

Optionally, the WUR 1403 is configured to: receive a wake-up packet sent by a WUR of a second station, and wake up the main radio transceiver of the first station based on the wake-up packet, where the wake-up packet is sent after the second station listens and obtains the TWT indication information of the first station, and determines the TWT of the WUR of the first station based on the TWT indication information of the first station.

Optionally, the wake-up packet includes a tunneled direct link setup TDLS request.

The main radio transceiver 1401 is further configured to send a TDLS response to a main radio transceiver of the second station.

Optionally, the wake-up packet further includes a TDLS request type.

Optionally, the WUR 1403 is further configured to receive a TDLS request sent by the WUR of the second station.

The main radio transceiver 1401 is further configured to send a TDLS response to a main radio transceiver of the second station.

Optionally, if the TDLS request is a TDLS discovery request, the TDLS response is a TDLS discovery response; or
if the TDLS request is a TDLS direct link setup request, the TDLS response is a TDLS direct link setup response; or
if the TDLS request is a TDLS direct link teardown request, the TDLS response is a TDLS direct link teardown response.

Optionally, if the TDLS request is a TDLS direct link setup request,
the main radio transceiver 1401 is further configured to receive a TDLS direct link setup confirmation sent by the main radio transceiver of the second station.

The station provided in Aspect 5 of this application may perform the information transmission method performed by the first station in any one of FIG. 2 to FIG. 9. For a specific implementation process and beneficial effects, refer to the foregoing description, and details are not described herein again.

Aspect 6 of this application provides a station. FIG. 15 is a schematic structural diagram of the station according to Aspect 6 of this application. As shown in FIG. 15, a station 1500 may include a main radio transceiver 1501 and a processor 1502. The main radio transceiver 1501 connects to the processor 1502. The station 1500 is a second station.

The main radio transceiver 1501 is configured to listen for TWT indication information sent by an AP to a first station.

The processor 1502 is configured to determine a TWT of a WUR of the first station based on the TWT indication information of the first station, where the TWT of the WUR of the first station includes an awake time of the WUR of the first station.

Optionally, the TWT indication information of the first station includes indication information corresponding to the TWT of the WUR of the first station.

Alternatively, the TWT indication information of the first station includes indication information corresponding to a TWT of a main radio transceiver of the first station.

The processor 1502 is specifically configured to determine the TWT of the WUR of the first station based on the indication information corresponding to the TWT of the main radio transceiver of the first station and a preset correspondence between the TWT of the main radio transceiver and the TWT of the WUR

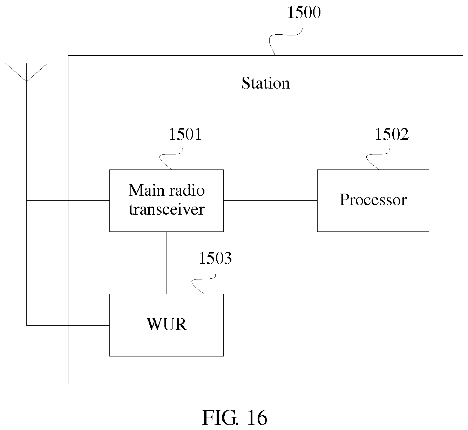

Optionally, FIG. 16 is a schematic structural diagram of another station according to Aspect 6 of this application. As shown in FIG. 16, the station 1500 may further include a WUR 1503. The WUR 1503 connects to the main radio transceiver 1501.

The WUR 1503 is configured to send a wake-up packet to the WUR of the first station, where the wake-up packet is used to instruct the WUR of the first station to wake up the main radio transceiver of the first station.

Optionally, the wake-up packet includes a tunneled direct link setup TDLS request.

The main radio transceiver 1501 is further configured to receive a TDLS response sent by the main radio transceiver of the first station.

Optionally, the WUR 1503 is further configured to send a TDLS request to the WUR of the first station.

The main radio transceiver 1501 is further configured to receive a TDLS response sent by the main radio transceiver of the first station.

The station provided in Aspect 6 of this application may perform the information transmission method performed by the second station in any one of FIG. 2 to FIG. 9. For a specific implementation process and beneficial effects, refer to the foregoing description, and details are not described herein again.

In addition, functional units in the aspects of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, or a network device) or a processor (processor) to perform all or some of the steps of the methods described in the aspects of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. An information transmission method, comprising:
listening (S203) for, by a second station, target wake time, TWT, indication information sent by an access point, AP, to a first station; and
determining (S204), by the second station, a TWT of a wake-up receiver, WUR, of the first station based on the TWT indication information of the first station, wherein the TWT of the WUR of the first station comprises an awake time of the WUR of the first station;
wherein the method further comprises:
sending, by a WUR of the second station, a wake-up packet to the WUR of the first station, wherein the wake-up packet is used to instruct the WUR of the first station to wake up a main radio transceiver of the first station.

2. The method according to claim 1, wherein the TWT indication information of the first station comprises indication information corresponding to the TWT of the WUR of the first station.

3. The method according to claim 1, wherein the TWT indication information of the first station comprises indication information corresponding to a TWT of the main radio transceiver of the first station; and
the determining, by the second station, a TWT of a wake up receiver WUR of the first station based on the TWT indication information of the first station comprises:
determining, by the second station, the TWT of the WUR of the first station based on the indication information corresponding to the TWT of the main radio transceiver of the first station and a preset correspondence between the TWT of the main radio transceiver and the TWT of the WUR

4. The method according to claim 1, wherein the method further comprises:
sending, by the WUR of the second station, a TDLS request to the WUR of the first station; and
receiving, by a main radio transceiver of the second station, a TDLS response sent by the main radio transceiver of the first station.

5. A station, wherein the station is a second station, the second station comprises a main radio transceiver (1501) and a processor (1502), and the main radio transceiver connects to the processor;
the main radio transceiver is configured to listen for target wake time TWT indication information sent by an access point AP to a first station; and
the processor is configured to determine a TWT of a wake up receiver WUR of the first station based on the TWT indication information of the first station, wherein the TWT of the WUR of the first station comprises an awake time of the WUR of the first station;
wherein the second station further comprises a WUR (1503), and the WUR connects to the main radio transceiver; and
the WUR is configured to send a wake-up packet to the WUR of the first station, wherein the wake-up packet is used to instruct the WUR of the first station to wake up a main radio transceiver of the first station.

6. The station according to claim 5, wherein the TWT indication information of the first station comprises indication information corresponding to the TWT of the WUR of the first station.

7. The station according to claim 5, wherein the TWT indication information of the first station comprises indication information corresponding to a TWT of the main radio transceiver of the first station; and
the processor is specifically configured to determine the TWT of the WUR of the first station based on the indication information corresponding to the TWT of the main radio transceiver of the first station and a preset correspondence between the TWT of the main radio transceiver and the TWT of the WUR

8. The station according to claim 5, wherein
the WUR is configured to send a TDLS request to the WUR of the first station; and
the main radio transceiver is further configured to receive a TDLS response sent by the main radio transceiver of the first station.

## Patentansprüche

1. Informationsübertragungsverfahren, das Folgendes umfasst:
Hören (S203), durch eine zweite Station, bezüglich Zielaufweckzeit- bzw. TWT(Target Wake Time)-Indikationsinformationen, die durch einen Zugangspunkt, AP (Access Point), an eine erste Station gesendet werden; und
Bestimmen (S204), durch die zweite Station, einer TWT eines Aufweckempfängers, WUR (Wake-Up Receiver), der ersten Station basierend auf den TWT-Indikationsinformationen der ersten Station, wobei die TWT des WUR der ersten Station eine Aufwachzeit des WUR der ersten Station umfasst;
wobei das Verfahren ferner Folgendes umfasst:
Senden, durch einen WUR der zweiten Station, eines Aufweckpakets an den WUR der ersten Station, wobei das Aufweckpaket verwendet wird, um den WUR der ersten Station zum Aufwecken eines Hauptfunkempfängers der ersten Station anzuweisen.

2. Verfahren nach Anspruch 1, wobei die TWT-Indikationsinformationen der ersten Station Indikationsinformationen umfassen, die der TWT des WUR der ersten Station entsprechen.

3. Verfahren nach Anspruch 1, wobei die TWT-Indikationsinformationen der ersten Station Indikationsinformationen umfassen, die einer TWT des Hauptfunkempfängers der ersten Station entsprechen; und
das Bestimmen, durch die zweite Station, einer TWT eines Aufweckempfängers WUR der ersten Station basierend auf den TWT-Indikationsinformationen der ersten Station Folgendes umfasst:
Bestimmen, durch die zweite Station, der TWT des WUR der ersten Station basierend auf den Indikationsinformationen, die der TWT des Hauptfunkempfängers der ersten Station entsprechen, und einer vorgegebenen Entsprechung zwischen der TWT des Hauptfunkempfängers und der TWT des WUR.

4. Verfahren nach Anspruch 1, wobei das Verfahren ferner Folgendes umfasst:
Senden, durch den WUR der zweiten Station, einer TDLS-Anforderung an den WUR der ersten Station; und
Empfangen, durch einen Hauptfunkempfänger der zweiten Station, einer TDLS-Antwort, die durch den Hauptfunkempfänger der ersten Station gesendet wird.

5. Station, wobei die Station eine zweite Station ist, die zweite Station einen Hauptfunkempfänger (1501) und einen Prozessor (1502) umfasst und der Hauptfunkempfänger mit dem Prozessor verbunden ist;
wobei der Hauptfunkempfänger zum Hören bezüglich Zielaufweckzeit- bzw. TWT-Indikationsinformationen konfiguriert ist, die durch einen Zugangspunkt, AP, an eine erste Station gesendet werden; und
der Prozessor zum Bestimmen einer TWT eines Aufweckempfängers WUR der ersten Station basierend auf den TWT-Indikationsinformationen der ersten Station konfiguriert ist, wobei die TWT des WUR der ersten Station eine Aufwachzeit des WUR der ersten Station umfasst;
wobei die zweite Station ferner einen WUR (1503) umfasst und der WUR mit dem Hauptfunkempfänger verbunden ist; und
der WUR zum Senden eines Aufweckpakets an den WUR der ersten Station konfiguriert ist, wobei das Aufweckpaket verwendet wird, um den WUR der ersten Station zum Aufwecken eines Hauptfunkempfängers der ersten Station anzuweisen.

6. Station nach Anspruch 5, wobei die TWT-Indikationsinformationen der ersten Station Indikationsinformationen umfassen, die der TWT des WUR der ersten Station entsprechen.

7. Station nach Anspruch 5, wobei die TWT-Indikationsinformationen der ersten Station Indikationsinformationen umfassen, die einer TWT des Hauptfunkempfängers der ersten Station entsprechen; und
der Prozessor speziell zum Bestimmen der TWT des WUR der ersten Station basierend auf den Indikationsinformationen, die der TWT des Hauptfunkempfängers der ersten Station entsprechen, und einer vorgegebenen Entsprechung zwischen der TWT des Hauptfunkempfängers und der TWT des WUR konfiguriert ist.

8. Station nach Anspruch 5, wobei
der WUR zum Senden einer TDLS-Anforderung an den WUR der ersten Station konfiguriert ist; und
der Hauptfunkempfänger ferner zum Empfangen einer TDLS-Antwort konfiguriert ist, die durch den Hauptfunkempfänger der ersten Station gesendet wird.

## Revendications

1. Procédé de transmission d'informations, comprenant les étapes consistant à :
écouter (S203), par une seconde station, une information d'indication de temps d'éveil cible (TWT) envoyée par un point d'accès (AP) à une première station ; et
déterminer (S204), par la seconde station, un TWT d'un récepteur de réveil (WUR) de la première station, sur la base de l'information d'indication TWT de la première station, le TWT du WUR de la première station comprenant un temps d'éveil du WUR de la première station ;
le procédé comprenant en outre l'étape consistant à :
envoyer, par un WUR de la seconde station, un paquet de réveil au WUR de la première station, le paquet de réveil étant utilisé pour donner l'instruction au WUR de la première station de réveiller un émetteur-récepteur radio principal de la première station.

2. Procédé selon la revendication 1, dans lequel l'information d'indication TWT de la première station comprend une information d'indication correspondant au TWT du WUR de la première station.

3. Procédé selon la revendication 1, dans lequel l'information d'indication TWT de la première station comprend une information d'indication correspondant à un TWT de l'émetteur-récepteur radio principal de la première station ; et
la détermination, par la seconde station, d'un TWT d'un récepteur de réveil (WUR) de la première station sur la base de l'information d'indication TWT de la première station comprend l'étape consistant à :
déterminer, par la seconde station, le TWT du WUR de la première station sur la base de l'information d'indication correspondant au TWT de l'émetteur-récepteur radio principal de la première station et d'une correspondance prédéfinie entre le TWT de l'émetteur-récepteur radio principal et le TWT du WUR.

4. Procédé selon la revendication 1, le procédé comprenant en outre les étapes consistant à :
envoyer, par le WUR de la seconde station, une demande TDLS au WUR de la première station ; et
recevoir, par un émetteur-récepteur radio principal de la seconde station, une réponse TDLS envoyée par l'émetteur-récepteur radio principal de la première station.

5. Station, la station étant une seconde station, la seconde station comprenant un émetteur-récepteur radio principal (1501) et un processeur (1502), et l'émetteur-récepteur radio principal se connectant au processeur ;
l'émetteur-récepteur radio principal étant configuré pour écouter une information d'indication de temps d'éveil cible TWT envoyée par un point d'accès AP à une première station ; et
le processeur étant configuré pour déterminer un TWT d'un récepteur de réveil (WUR) de la première station, sur la base de l'information d'indication TWT de la première station, le TWT du WUR de la première station comprenant un temps d'éveil du WUR de la première station ;
la seconde station comprenant en outre un WUR (1503) et le WUR se connectant à l'émetteur-récepteur radio principal ; et
le WUR étant configuré pour envoyer un paquet de réveil au WUR de la première station, le paquet de réveil étant utilisé pour donner l'instruction au WUR de la première station de réveiller un émetteur-récepteur radio principal de la première station.

6. Station selon la revendication 5, dans laquelle l'information d'indication TWT de la première station comprend une information d'indication correspondant au TWT du WUR de la première station.

7. Station selon la revendication 5, dans laquelle l'information d'indication TWT de la première station comprend une information d'indication correspondant à un TWT de l'émetteur-récepteur radio principal de la première station ; et
le processeur est spécifiquement configuré pour déterminer le TWT du WUR de la première station sur la base de l'information d'indication correspondant au TWT de l'émetteur-récepteur radio principal de la première station et d'une correspondance prédéfinie entre le TWT de l'émetteur-récepteur radio principal et le TWT du WUR.

8. Station selon la revendication 5, dans laquelle :
le WUR est configuré pour envoyer une demande TDLS au WUR de la première station ; et
l'émetteur-récepteur radio principal est en outre configuré pour recevoir une réponse TDLS envoyée par l'émetteur-récepteur radio principal de la première station.
